# EUROPÄISCHE PATENTSCHRIFT

(11) **EP 2 334 968 B1**
(45) Veröffentlichungstag und Bekanntmachung des Hinweises auf die Patenterteilung: **06.06.2012**
(21) Anmeldenummer: 09756404.1
(22) Anmeldetag: 25.09.2009
(51) Int. Cl.: F16L 37/36

(54) **VERSCHLUSSKUPPLUNG**
LOCKING COUPLING
ACCOUPLEMENT À VERROUILLAGE

(30) Priorität: 10.10.2008 DE 102008051303
(43) Veröffentlichungstag der Anmeldung: 22.06.2011
(73) Patentinhaber: Völker, Manfred, 63825 Blankenbach (DE)
(72) Erfinder: Völker, Manfred, 63825 Blankenbach (DE)
(74) Vertreter: Flosdorff, Jürgen
(86) Internationale Anmeldenummer: PCT/DE2009/001351
(87) Internationale Veröffentlichungsnummer: WO 2010/040334

(56) Entgegenhaltungen:
- DE-A1- 4 316 486
- US-A- 5 009 252
- US-A1- 2001 052 366

## Beschreibung

Die Erfindung betrifft eine Kupplungseinheit, bestehend aus einem Nippelteil und einem Kupplungsteil, einer Anordnung zum Abzweigen einer Flüssigkeit aus einem Rohr oder einer stationären Einheit oder zum Zuführen bzw. zur Entnahme einer Flüssigkeit aus einer flexiblen Schlauchverbindung in ein Rohr oder in eine stationäre Einheit, wobei ein Teil der Kupplungseinheit mit einem Abschnitt in einem Rohr oder in einer stationäre Einheit befestigt ist und wobei in dem Nippelteil und dem Kupplungsteil jeweils ein von einer Feder in die Verschlussstellung vorgespannter Ventilkörper verschieblich gehalten ist.

Es sind Kupplungen aus Metall oder auch aus einer Kombination aus Metall und Kunststoff bekannt.

Kupplungen der betrachtenden Art sind sowohl beim Nippelteil als auch beim Kupplungsteil zweiteilig gefertigt, zum einen, um ein Dichtventil einzubringen, und zum anderen, um unterschiedliche Anschlüsse anzubringen, wie z.B. ein Gewinde zum Einschrauben oder auch einen Schlauchanschluss zur flexiblen Weiterleitung.

Wegen des Fließverhaltens und der Weichheit des Kunststoffes lockern sich bei mechanischen oder auch thermischen Beanspruchungen die bisher verschraubten Hälften der Kupplungen sowohl beim Nippelteil als auch beim Kupplungsteil. In der Regel verwendet man deshalb eine Materialkombination aus Metall und Kunststoff, um die Verschraubung zu sichern.

Aber auch bei Materialkombinationen lockern sich die Kupplungshälften, bzw. deren stationären Befestigungen.

US 2001/052366 A1 offenbart eine Kupplungseinheit, bei der ein Kupplungselement aus zwei Teilen zusammengesetzt ist, die miteinander verschraubt sind. Ein Blockierungsring soll verhindern, dass sich die Verschraubung im Laufe der Zeit lockert. Das andere Kupplungselement ist ebenfalls aus zwei Teilen zusammengesetzt, wobei über die Art der Befestigung der beiden Teile keine Angaben gemacht sind.

Der vorliegenden Erfindung liegt die Aufgabe zugrunde, eine Kupplungseinheit der eingangs genannten Art zu verbessern.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass das Nippelteil und das Kupplungsteil Kunststoff-Verschlussstücke aufweisen, von denen eines an einem Endabschnitt den Gewindeabschnitt oder auch einen glatten Stutzen zum Anpressen der Dichtungen zum Befestigen in dem Rohrstutzen bzw. Anschlussblock und das andere die Aufnahme für einen Schlauch hat und an dem anderen Endabschnitt Rastelemente aufweist, wobei die Verschlussstücke so mit einem Nippelelement und einem Kupplungselement zusammengesetzt sind, dass sie in diese eingesteckt sind, wobei die Rastelemente an den Verschlussstücken im vollständig eingesteckten Zustand der Verschlussstücke in zugehörige Rastelemente an dem Kupplungselement und dem Nippelelement einrasten und den axialen Zusammenhalt der beiden Teile fixieren. Damit ist sicher gestellt, dass sich die Verbindung zwischen dem Verschlussstück und dem Kupplungselement bzw. Nippelelement infolge des häufigen Konnektierens und Diskonnektierens der Kupplungseinheit im Laufe der Zeit nicht lockern kann, so dass Leckagen im Bereich der Kupplungseinheit ausgeschlossen sind.

Dadurch, dass die Verschlussstücke und das Nippelement sowie das Kupplungselement zu ihrer Verbindung nicht mehr mit einem Gewinde versehen sind, sind diese Teile erheblich billiger im Spritzgussverfahren herstellbar.

In einer bevorzugten Ausgestaltung der Erfindung bestehen die Rastelemente aus wenigstens einem ringförmigen radialen Vorsprung an dem einen der beiden Teile und aus wenigstens einer entsprechend bemessenen Ringnut an dem anderen Teil. Andere Rastelemente wie Rastzähne oder eine Bajonett-Verrastung liegen im Rahmen der Erfindung.

Bevorzugt ist, dass ein ringförmiger Vorsprung außen an einem Flansch der Verschlussstücke angeformt ist, der in eine innere Nut am Endabschnitt des jeweiligen Nippel- oder Kupplungselementes am Ende des Einsteckvorgangs einrastet. Alternativ kann außen in dem Flansch der Verschlussstücke eine Ringnut ausgebildet sein, in die ein innen am Endabschnitt des jeweiligen Nippel- oder Kupplungselementes angeformter ringförmiger Vorsprung einrastet. Der ringförmige Vorsprung kann auch durch einen elastisch verformbaren Kunststoff wie z.B. einen O-Ring in einem entsprechenden Sitz hergestellt werden.

Bevorzugt sind entsprechende Rastelemente in einem axialen Abstand von den oben erwähnten Rastelementen vorgesehen.

Die Rastverbindung stellt nicht nur sicher, dass sich die beiden Teile nicht lockern können, sondern sie ermöglicht es durch die feste Verrastung auch, das Nippelteil oder gegebenenfalls das Kupplungsteil komplett aus seinem Sitz heraus zu drehen ist, wenn das Verschlussstück einen Gewindeabschnitt enthält. Außerdem ist das Lösen des Schlauches für Servicezwecke am Verschlussstück mit Schlauchanschluss ohne Lockerung der beiden Teile möglich.

Die Verrastung ist vorzugsweise nicht lösbar, obwohl auch die Lösbarkeit der Verbindung im Rahmen der Erfindung liegt.

Nach einem weiteren Vorschlag der Erfindung ist das Nippelteil und/oder das Kupplungsteil mit einem Befestigungsbund versehen, der zweckmäßigerweise Löcher zum Durchgriff von Befestigungsschrauben aufweist. Dieser Befestigungsbund stellt zum einen die Verdrehsicherung und zum anderen die Befestigung und Abdichtung an einer Entnahmeeinheit mittels der O-Ringe sicher, sodass eine Befestigung ohne Gewindeabschnitt am Verschlussstück möglich ist.

In dem Nippelteil und dem Kupplungsteil ist jeweils ein von einer Feder in die Verschlussstellung vorgespannter Ventilkörper verschieblich gehalten, wobei beim Zusammensetzen des Nippelteils mit dem Kupplungsteil zylindrische Ansätze der beiden Ventilkörper derart aufeinander auftreffen, dass die beiden Ventilkörper in die Öffnungsstellung verschoben werden.

Mit großem Vorteil wird vorgeschlagen, dass die Ventilkörper jeweils zylindrische Abschnitte aufweisen, zwischen denen in einer Ringnut ein Dichtungsring angeordnet ist, der in der Verschlussstellung des Ventilkörpers dicht an einem Ventilsitz anliegt, und dass beidseitig des Dichtungsrings von den zylindrischen Abschnitten wenigstens ein Umfangsabschnitt weg geschnitten ist. Bevorzugt ist dabei, dass an jedem der beiden zylindrischen Abschnitte zwei bevorzugt diametral gegenüberliegende Umfangsabschnitte weg geschnitten sind.

Vorteilhafterweise haben die zylindrischen Abschnitte an den weggeschnittenen Stellen eine konkave Form, wobei diese konkave Form sowohl in Querrichtung als auch Längsrichtung der weg geschnittenen Umfangsabschnitte ausgebildet sein sollte.

Durch diese Ausbildung der Ventilkörper ist erreicht, dass Ablagerungen an den Ventilkörpern weitestgehend vermieden sind, da die Flüssigkeit nahezu vollständig den Bereich der weg geschnittenen Abschnitte durchströmt, so dass sich dort wegen der strömungsgünstigen Form der Ventilkörper praktisch keine Verschmutzungen ablagern können.

Es wird betont, dass die besondere Ausgestaltung des Ventilkörpers als eigenständige Erfindung betrachtet wird.

Weitere Einzelheiten der Erfindung ergeben sich aus der nachfolgenden Beschreibung sowie anhand der Zeichnungen. Dabei zeigen:
- Figuren 1a und 1b: eine Ausführungsform des erfindungsgemäßen Nippelteils in einem Längsschnitt und in einer perspektivischen Darstellung;
- Figuren 2a und 2b: eine Ausführungsform des erfindungsgemäßen Kupplungsteils in einem Längsschnitt und einer perspektivischen Darstellung;
- Figuren 3a und 3b: den zusammengesetzten Zustand des Nippelteils und des Kupplungsteils in Längsschnitten, die im Winkel von etwa 90° zueinander liegen, und
- Figuren 4a und 4b: eine Ausführungsform des Ventilkörpers in verschiedenen perspektivischen Ansichten.

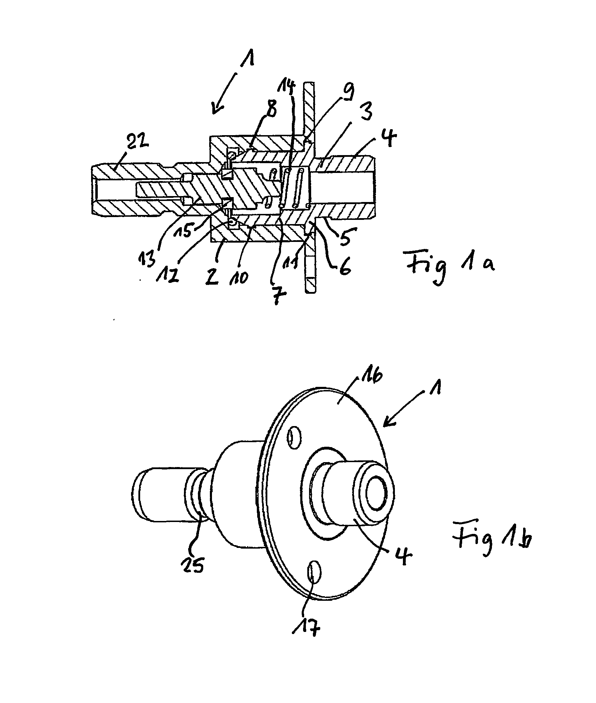

Das in den Figuren 1 a und 1 b dargestellte Nippelteil ist insgesamt mit den Bezugszeichen 1 bezeichnet. Es ist aus einem Nippelelement 2 und einem Verschlussstück 3 zusammen gesetzt, das in das Nippelelement 2 eingesteckt ist. Das Verschlussstück 3 enthält an seinem freien Endabschnitt einen Gewindeabschnitt 4, oder auch einen glatten Zylinder, der nach einer Einschnürung 5 in einen flanschartigen Vorsprung 6 übergeht. Es schließt sich ein Abschnitt mit glatter zylindrischer Umfangsfläche an, der nahe seinem freien Ende mit einem äußeren ringförmigen Vorsprung 8 versehen ist. Der Flansch 6 enthält ebenfalls an seinem Außenumfang einen ringförmigen Vorsprung 9.

Die Figuren 1a und 1 b zeigen den Zustand, in dem das Verschlussstück 3 in das Nippelelement 2 eingerastet ist. Hierzu sind an entsprechenden Stellen der Innenfläche des Nippelelementes 2 Ringnuten 10 und 11 ausgebildet, in die die ringförmigen Vorsprünge 8 und 9 federnd einrasten. Dabei versteht es sich, dass das Verschlussstück 3 und das Nippelelement 2 aus einem Material, vorzugsweise Kunststoff bestehen, der das federnde Einrasten der Rastelemente 8, 9, 10 und 11 zulässt und die Rastverbindung sicher aufrecht erhält. Dies wird auch durch eine geeignete Bemessung und Querschnittsform der Rastelemente sicher gestellt, indem diese beispielsweise eine Rechteckform haben, gegebenenfalls mit leicht gerundeten Kanten, die das Eintreten der ringförmigen Vorsprünge in die Nuten erleichtert.

Der in der Darstellung linke vordere Randabschnitt des Verschlussstücks 3 liegt an einer ringförmigen Dichtung 12 an und presst diese an eine entsprechende Auflagefläche des Nippelelementes 2.

In dem Nippelteil 1 ist ein Ventilkörper 13 verschieblich angeordnet, der von einer Schraubendruckfeder 14 mit seinem O-Dichtungsring 15 gegen einen entsprechenden Ventilsitz des Nippelelementes 2 vorgespannt ist.

Das Nippelelement 2 ist an seinem in der Darstellung der Figur 1 a und 1 b rechten Ende mit einem Bund 16 versehen, der Löcher 17 zum Durchgriff von Befestigungsschrauben hat, mit denen das Nippelelement 1 beispielsweise an einem nicht dargestellten Montagerahmen befestigt werden kann.

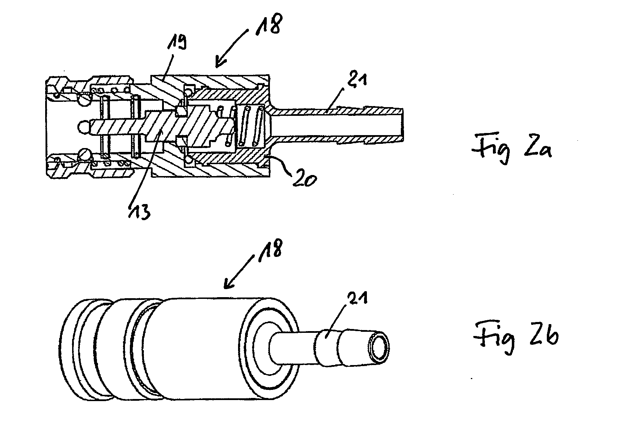

In den Figuren 2a und 2b ist ein zugehöriges Kupplungsteil 18 dargestellt, das aus einem Kupplungselement 19 und einem Verschlussstück 20 zusammengesetzt ist, wobei das letztere in das Kupplungselement 19 eingesteckt und in der Endstellung auf dieselbe Weise mit diesem verrastet ist. Das Verschlussstück 20 enthält eine Schlauchtülle 21. In dem Kupplungsteil 18 ist auf dieselbe Weise ein identischer Ventilkörper 13 verschieblich und federbeaufschlagt angeordnet.

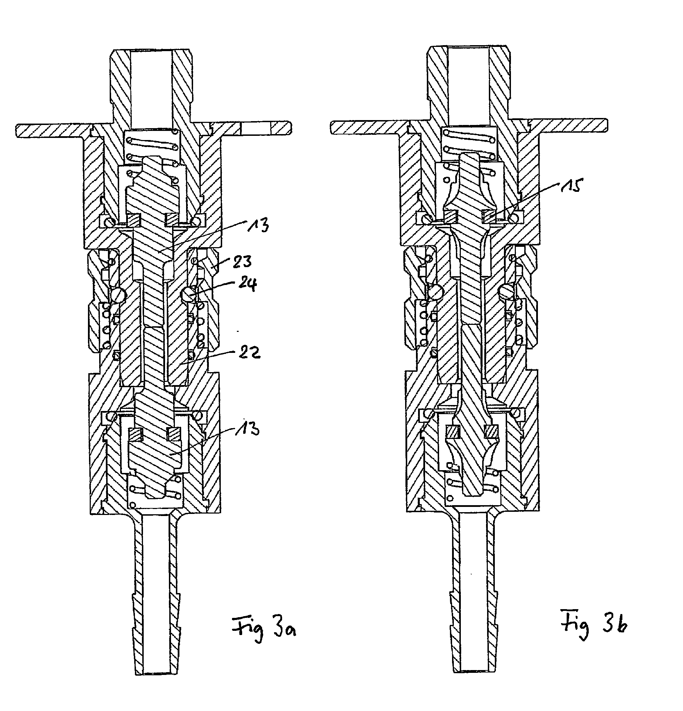

Die Figuren 3a und 3b zeigen den zusammengesetzten Zustand des Nippelteils 1 mit dem Kupplungsteil 18, wobei ein im wesentlichen rohrförmiger Ansatz 22 so in das Kupplungsteil 18 eingesteckt ist, dass die beiden Ventilkörper 13 aufeinander treffen und sich gegenseitig in die Öffnungsstellung verschieben. Der zusammengesetzte Zustand ist durch eine an sich bekannte Hülse 23, die gegen Federkraft verschieblich ist, und durch Kugeln 24 gesichert, die in eine äußere Ringnut 25 des Ansatzes 22 eingreifen.

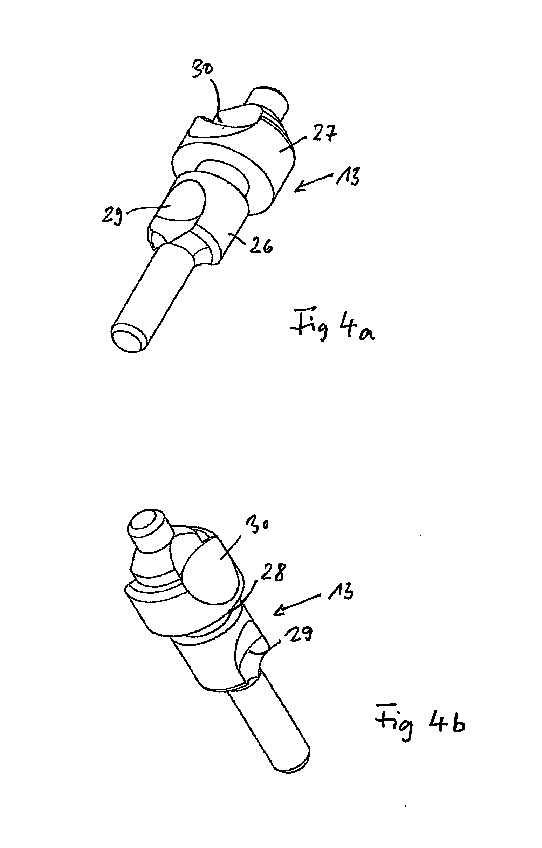

Die Figuren 4a und 4b zeigen einen erfindungsgemäßen Ventilkörper 13, der im wesentlichen vier zylindrische Abschnitte mit unterschiedlichen Durchmessern enthält. Die beiden mittleren im wesentlichen zylindrischen Abschnitte 26 und 27 sind durch eine Ringnut 28 voneinander getrennt, in der die oben erwähnte Ringdichtung 1 5 sitzt, die in den Figuren 4a und 4b nicht dargestellt ist.

Von den im wesentlichen zylindrischen Abschnitten 26 und 27 sind konkav gewölbte Umfangsabschnitte 29 und 30 weg geschnitten, durch die bei geöffneten Ventilen der größte Teil der Flüssigkeit strömt. Die weg geschnittenen Abschnitte sind strömungsgünstig sowohl in Fließrichtung als auch in hierzu quer verlaufender Richtung gewölbt, so dass sich praktisch keine Ablagerungen bilden können. Wie eine Zusammenschau der Figuren 3a und 3b erkennen lässt, strömt die gesamte Flüssigkeit im Bereich der Ventilsitze nur durch die beiden jeweils diametral gegenüberliegenden Durchlässe, die durch die weg geschnittenen Abschnitte entstehen.

Es wird betont, dass die Erfindung nicht auf die beschriebenen und dargestellten Ausführungsformen beschränkt ist. Vielmehr sind alle offenbarten Merkmale auf jede Weise einzeln miteinander kombinierbar.

## Patentansprüche

1. Kupplungseinheit, bestehend aus einem Nippelteil (1) und einem Kupptungster (18), einer Anordnung zum Abzweigen einer Flüssigkeit aus einem Rohr oder einer stationären Einheit oder zum Zuführen bzw. zur Entnahme einer
Flüssigkeit aus einer flexiblen Schlauchverbindung in ein Rohr oder in eine stationäre Einheit, wobei ein Teil der Kupplungseinheit mit einem Abschnitt (4) in einem Rohr oder in einer stationäre Einheit befestigt ist, wobei in dem Nippelteil (1) und dem Kupplungsteil (18) jeweils ein von einer Feder (14) in die Verschlussstellung vorgespannter Ventilkörper (13) verschieblich gehalten ist,
wobei das Nippelteil (1) und das Kupplungsteil (18) aus einem Verschlussstück (3,20) und einem Nippelelement (2) bzw. Kupplungselement (19) zusammengesetzt sind, in das das jeweilige Verschlussstück (3,20) eingesteckt ist,
**dadurch gekennzeichnet,**
**dass** an jedem Verschlussstück (3,20) und dem Nippelelement (2) sowie dem Kupplungselement (19) Rastelemente (8, 9 ; 10, 11) ausgebildet sind, die im vollständig eingesteckten Zustand der Verschlussstücke (3,20) in das Nippelelement (2) und das Kupplungselement (19) ineinander einrasten, und dass die Rastelemente wenigstens einen ringförmigen radialen Vorsprung (9) und eine Ringnut (11) aufweisen.

2. Kupplungseinheit nach Anspruch 1,
**dadurch gekennzeichnet,**
**dass** der Abschnitt (4) ein Befestigungsgewinde aufweist.

3. Kupplungseinheit nach Anspruch 1,
**dadurch gekennzeichnet,**
**dass** der Abschnitt (4) einen zylindrischen Stutzen zum Anpressen der Dichtungen mittels eines Befestigungsbundes (16) aufweist.

4. Kupplungseinheit nach Anspruch 1,
**dadurch gekennzeichnet,**
**dass** ein ringförmiger Vorsprung (9) außen an einem Flansch (6) des Verschlussstücks (3) angeformt ist, der in eine innere Nut (11) am Endabschnitt des Nippelelementes (2) oder Kupplungselementes (19) einrastet.

5. Kupplungseinheit nach den Ansprüchen 1 bis 4,
**dadurch gekennzeichnet,**
**dass** die Rastelemente zwei oder mehr ringförmige radiale Vorsprünge (8,9) und eine entsprechende Anzahl von Ringnuten (10, 11) aufweisen.

6. Kupplungseinheit nach den Ansprüchen 1 bis 5,
**dadurch gekennzeichnet,**
**dass** das Nippelteil (1) und/oder das Kupplungsteil (18) einen Befestigungsbund (16) aufweisen.

7. Kupplungseinheit nach Anspruch 6,
**dadurch gekennzeichnet,**
**dass** der Befestigungsbund (16) Löcher (17) zum Durchgriff von Befestigungsschrauben aufweist.

8. Kupplungseinheit nach einem der Ansprüche 1 bis 7,
**dadurch gekennzeichnet,**
**dass** die Ventilkörper (13) jeweils zylindrische Abschnitte (26,27) aufweisen, zwischen denen in einer Ringnut (28) ein Dichtungsring (15) angeordnet ist, der in der Verschlussstellung des Ventilkörpers (13) dicht an einem Ventilsitz anliegt, und dass von den zylindrischen Abschnitten (26,27) beidseitig des Dichtungsrings (15) wenigstens ein Umfangsabschnitt (29,30) weg geschnitten ist.

9. Kupplungseinheit nach Anspruch 8,
**dadurch gekennzeichnet,**
**dass** an jedem der beiden zylindrischen Abschnitte (26,27) zwei bevorzugt diametral gegenüberliegende Umfangsabschnitte weggeschnitten sind.

10. Kupplungseinheit nach den Ansprüchen 8 oder 9,
**dadurch gekennzeichnet,**
**dass** die zylindrischen Abschnitte (26,27) an den weg geschnittenen Stellen eine konkav gewölbte Form haben.

## Claims

1. A coupling unit assisting of a nipple portion (1) and a coupling portion (18), a device for branching off a liquid from a pipe or a stationary unit or for supplying or removing a liquid from a flexible hose connection into a pipe or into a stationary unit, wherein a portion of the coupling unit is fastened with a section (4) in a pipe or in a stationary unit, wherein movably retained in the nipple portion (1) and the coupling portion (18) there is a respective valve body (13) biased by a spring (14) into the closed position, wherein the nipple portion (1) and the coupling portion (18) are composed of a locking member (3, 20) and a nipple element (2) or coupling element (19), into which the respective locking member (3, 20) is inserted, **characterised in that** formed on each locking member (3, 20) and the nipple element (2) and also the coupling element (18) there are locking elements (8, 9; 10, 11) which latch into one another in the fully inserted state of the locking members (3, 20) into the nipple element (2) and the coupling element (19), and that the locking elements have at least one annular, radial projection (19) and an annular groove (11).

2. A coupling unit as claimed in claim 1, **characterised in that** the section (4) includes a fastening thread.

3. A coupling unit as claimed in claim 1, **characterised in that** the section (4) includes a cylindrical connecting piece for pressing on the seals by means of a fastening flange (16).

4. A coupling unit as claimed in claim 1, **characterised in that** an annular projection (9) is formed externally on a flange (6) of the locking member (3), which engages into an internal groove (11) on the end section of the nipple element (2) or coupling element (19).

5. A coupling unit as claimed in claims 1 to 4, **characterised in that** the locking elements include two or more annular, radial projections (8, 9) and a corresponding number of annular grooves (10, 11).

6. A coupling unit as claimed in claims 1 to 5, **characterised in that** the nipple portion (1) and/or the coupling portion (18) include a fastening flange (16).

7. A coupling unit as claimed in claim 6, **characterised in that** the fastening flange (16) includes holes (17) through which fastening screws may pass.

8. A coupling unit as claimed in one of claims 1 to 7, **characterised in that** the valve bodies (13) each include cylindrical sections (26, 27), between which disposed in an annular groove (28) there is a sealing ring (15), which, in the locked position of the valve body (13), sealingly engages a valve seat and that at least one peripheral section (29, 30) is cut away from the cylindrical section (26, 27) on both sides of the sealing ring (15).

9. A coupling unit as claimed in claim 8, **characterised in that** two, preferably diametrically opposed, peripheral sections are cut away on each of the two cylindrical sections (26, 27).

10. A coupling unit as claimed in claimed in claims 8 or 9, **characterised in that** the cylindrical sections (26, 27) have a concave, domed shape at the cut away positions.

## Revendications

1. Unité d'accouplement, constituée d'une partie raccord fileté (1) et d'une partie accouplement (18), d'un ensemble servant à dévier un liquide d'un tube ou d'une unité stationnaire ou servant à amener ou à prélever un liquide d'un raccord pour tuyaux flexible dans un tube ou dans une unité stationnaire, sachant qu'une partie de l'unité d'accouplement est fixée par une section (4) dans un tube ou dans une unité stationnaire, sachant que respectivement un corps de soupape (13) précontraint par un ressort (14) dans une position de fermeture est maintenu de manière mobile dans la partie raccord filetée (1) et dans la partie accouplement (18), sachant que la partie raccord fileté (1) et la partie accouplement (18) sont constituées d'un obturateur (3, 20) et d'un élément raccord fileté (2) ou d'un élément accouplement (19), dans lequel est placé l'obturateur (3, 20) concerné,
**caractérisée en ce**
**que** des éléments à cran d'arrêt (8, 9 ; 10, 11) sont réalisés au niveau de chaque obturateur (3, 20) et au niveau de l'élément raccord fileté (2) ainsi qu'au niveau de l'élément accouplement (19), lesquels éléments à cran d'arrêt s'enclenchent les uns dans les autres lorsque les obturateurs (3, 20) sont complètement insérés dans l'élément raccord fileté (2) et dans l'élément accouplement (19), et en ce que les éléments à cran d'arrêt présentent au moins une partie faisant saillie (9) radiale annulaire et une rainure annulaire (11).

2. Unité d'accouplement selon la revendication 1, **caractérisée en ce**
**que** la section (4) présente un filetage de fixation.

3. Unité d'accouplement selon la revendication 1, **caractérisée en ce**
**que** la section (4) présente un embout cylindrique servant à presser les garnitures d'étanchéité au moyen d'une collerette de fixation (16).

4. Unité d'accouplement selon la revendication 1, **caractérisée en ce**
**qu'**une partie faisant saillie (9) annulaire est formée à l'extérieur sur une bride (6) de l'obturateur (3), laquelle s'enclenche dans une rainure (11) intérieure au niveau de la section terminale de l'élément raccord fileté (2) ou de l'élément accouplement (19).

5. Unité d'accouplement selon les revendications 1 à 4,
**caractérisée en ce**
**que** les éléments à cran d'arrêt présentent deux parties faisant saillie (8, 9) radiales annulaires ou plus et un nombre correspondant de rainures annulaires (10, 11).

6. Unité d'accouplement selon les revendications 1 à 5,
**caractérisée en ce**
**que** la partie raccord fileté (1) et/ou la partie accouplement (18) présentent une collerette de fixation (16).

7. Unité d'accouplement selon la revendication 6, **caractérisée en ce**
**que** la collerette de fixation (16) présente des trous (17) pour le passage de vis de fixation.

8. Unité d'accouplement selon l'une quelconque des revendications 1 à 7,
**caractérisée en ce**
**que** les corps de soupape (13) présentent respectivement des sections (26, 27) cylindriques, entre lesquelles est disposée une bague d'étanchéité (15) dans une rainure annulaire (28), laquelle bague d'étanchéité repose de manière étanche contre un siège de soupape dans la position de fermeture du corps de soupape (13), et en ce qu'au moins une section périphérique (29, 30) est découpée des sections cylindriques (26, 27) de part et d'autre de la bague d'étanchéité (15).

9. Unité d'accouplement selon la revendication 8, **caractérisée en ce**
**que** deux sections périphériques de préférence diamétralement opposées sont découpées au niveau de chacune des deux sections cylindriques (26, 27).

10. Unité d'accouplement selon les revendications 8 ou 9,
**caractérisée en ce**
**que** les sections (26, 27) cylindriques présentent une forme bombée concave au niveau des endroits découpés.
